# EUROPEAN PATENT SPECIFICATION

(11) **EP 1 977 654 B1**
(45) Date of publication and mention of the grant of the patent: **30.05.2012**
(21) Application number: 08005646.8
(22) Date of filing: 26.03.2008
(51) Int. Cl.: A23L 1/182

(54) **Process for the preparation of quick-cooking white rice**
Zubereitungsverfahren für schnellkochenden weissen Reis
Méthode de préparation de riz blanc à cuisson rapide

(30) Priority: 30.03.2007 IT MI20070648
(43) Date of publication of application: 08.10.2008
(73) Proprietor: Mazzini, Flavio, 27029 Vigevano (PV) (IT); Riso Viazzo S.r.l., 13040 Crova (VC) (IT)
(72) Inventor: Mazzini, Flavio, 27029 Vigevano (Pavia) (IT)
(74) Representative: Carloni, Franco

(56) References cited:
- GB-A- 2 186 178
- JP-A- 62 155 060
- KR-B1- 880 000 214
- KR-B1- 940 002 526
- US-A- 4 927 660
- US-A- 5 017 395

## Description

The present invention relates to a quick-cooking white rice and to a process for preparing the same.

Rough rice, or paddy rice, which is gathered by harvesting and threshing, comprises an inner endosperm, which consist mainly of starch, and a germ, and is coated by a protective wall (pericarp) which contains most of the oils, fats, vitamins, proteins and minerals, and by an outer covering (husk).

Rough rice, after drying, has a moisture content of 12-14% by weight, and becomes edible after a suitable process for removing the husk. After the husk is removed, also the coating and the germ are removed in order to make the rice more suitable for storage and for consumption. The rice obtained from this process is known as "white rice" or "polished rice".

White rice is generally prepared for consumption by boiling in excess water for about twenty minutes, in order to obtain a product which is soft in texture and palatable in taste. While cooking, the rice starch is hydrated and gelatinised, with a concomitant absorption of water, and the rice grains swell to several times their original size. With the customary varieties of white rice, the gelatinisation and swelling of the rice grains occurs at temperatures in the approximate range of 65-90° centigrade.

A problem with the known varieties of white rice is that a relatively long cooking time is required for obtaining a food product from rice having an attractive taste and appearance.

A Various methods for converting ordinary white rice into an instant rice which can be very rapidly prepared for the table is are known from published patents US 2 715 579 [insert A]. However, the instant rice obtained by this method has the disadvantage that the rice grains have an increased volume and a chalky appearance which makes the rice product generally unappealing to the consumer.

The object of the present invention is, therefore, to provide a new process for preparing a quick-cooking white rice and a novel white rice product obtained thereby which has substantially the same appearance and volume of an ordinary white rice and can be quickly be prepared for consumption.

This object is achieved, according to the invention, by a process for preparing dried white rice, which comprises the steps of:
a) soaking the grains of white rice in water at a temperature below the gelatinisation point of the rice, whereby the moisture content of said grains of white rice is raised from an original value to a value from about 20% to 50% by weight,
b) draining and rinsing repeatedly the grains of white rice resulting from said step a) with water at a temperature below the gelatinisation point of the rice,
c) transferring the grains of white rice resulting from said step b) into a reactor,
d) subjecting the grains of white rice in said reactor to a gelatinisation treatment,
e) removing the gelatinised grains of white rice from said reactor,
f) separating the gelatinised grains of white rice, and
g) drying the gelatinised and separated grains of white rice, and
is characterised in that said reactor in which the gelatinisation treatment is carried out is closed to mass transfer and is heated for causing the rice grains contained therein to gelatinise.

The white rice product obtained by the process of the invention comprises separated and substantially gelatinised grains of white rice, having a similar, more glassy-like appearance and the same volume of an ordinary white rice, and a structure which is capable of being more quickly hydrated during cooking for consumption and has softness and palatable characteristics similar to those of original white rice.

The present invention will now be described by means of the following examples of the process.

### Example I

100 grams of white rice of the Arborio variety with a moisture content of about 12% by weight were placed in a vessel containing 0.3 litres of water at a temperature of 4° centigrade and allowed to soak for 9 hours. Thereafter the soaked rice grains were drained and rinsed repeatedly with water at a temperature of 4° centigrade. At that point the rice grains had a moisture content of 35% by weight. According to the invention, satisfactory results are obtained if the soaking time is chosen so that the moisture content may range from about 20% and 50% by weight, and preferably between 30% and 40% by weight. Then the soaked rice grains where transferred in a 0,5 litre closed metal vessel and the closed vessel was introduced into a heating chamber and heated with steam for about 20 minutes. After the heating step, the rice grains were allowed to rest in the closed vessel for further 30 minutes within the heating chamber. Thereafter, the rice grains were taken out of the vessel and subjected to a mechanical treatment of conventional kind in the art in order to separate them. The separated rice grains were allowed to dry at room temperature in order to reduce their moisture content to about 15% by weight. The white rice product thus obtained presented substantially the same appearance and volume of original white rice. The white rice product was then cooked in excess water for about 7 minutes and a cooked rice food product having softness and palatable characteristics similar to a traditional cooked rice was obtained.

### Example II

100 grams of white rice of the Arborio variety with a moisture content of about 12% by weight were placed in a vessel containing 0.3 litres of water at a temperature of 4° centigrade and allowed to soak for 9 hours. Thereafter the soaked rice grains were drained and rinsed repeatedly with water at a temperature of 4° centigrade. At that point the rice grains had a moisture content of 35% by weight. The rice grains were sprinkled with an emulsion of oil and water in order to cover the rice grains with a lubricant layer. Thereafter the soaked rice grains where transferred to a 0,5 litre closed metal vessel and the closed vessel was introduced into a heating chamber and heated with steam for about 20 minutes. After the heating step the rice grains were allowed to rest in the closed vessel for further 30 minutes within the heating chamber. Thereafter, the rice grains were removed from the vessel and subjected to a mechanical treatment of conventional kind in the art in order to separate them. The separated rice grains were allowed to dry at room temperature in order to reduce the moisture content to about 15% by weight. The white rice product thus obtained presented substantially the same appearance and volume of original white rice. The white rice product was then cooked in excess water for about 7 minutes and a cooked rice food product having softness and palatable characteristics similar to a traditional cooked rice was obtained.

The details of the above examples are given for illustrative purposes only, and are intended neither to limit nor define the invention. A person skilled in the art may practise various modifications thereto without departing from the scope of the invention as claimed hereinbelow.

Specifically, the process of the invention can be carried out in a batch sequence or in a continuous sequence.

The water used in the steeping step may include nutritive and/or flavouring and/or colouring substances.

Furthermore, while the gelatinisation treatment of the soaked rice grains inside a closed reactor is carried out in a heating chamber by steam heating, other heating methods can be used for ensuring a suitable gelatinisation of the rice grains.

## Claims

1. A process for preparing dried white rice comprising the steps of:
a) soaking the grains of white rice in water at a temperature below the gelatinisation point of the rice, whereby the moisture content of said grains of white rice is raised from an original value to a value from about 20% to 50% by weight,
b) draining and rinsing repeatedly the grains of white rice resulting from said step a) with water at a temperature below the gelatinisation point of the rice,
c) transferring the grains of white rice resulting from said step b) into a reactor,
d) subjecting the grains of white rice in said reactor to a gelatinisation treatment,
e) removing the gelatinised grains of white rice from the said reactor,
f) separating the gelatinised grains of white rice, and
g) drying the gelatinised and separated grains of white rice, and is **characterised in that** said reactor in which the gelatinisation treatment is carried out is closed to mass transfer and is heated for causing the rice grains contained therein to gelatinise.

2. Process according to claim 1, **characterised in that** prior to placing the grains of white rice in the reactor they are treated with an emulsion of oil and water, in order to cover the rice grains with a lubricant layer for facilitating the subsequent separating step of the gelatinised grains of white rice.

3. Process according to claim 1, **characterised in that** prior to removing the grains of white rice from the reactor the same are allowed to rest in the closed reactor for about 30 minutes.

4. Process according to claim 1, **characterised in that** the heating step is performed by heating the closed reactor containing the grains of white rice with steam in heating chamber.

5. Process according to claim 1, **characterised in that** the water used in the soaking step of the grains of white rice includes nutritive and/or flavouring and/or colouring substances.

6. Process according to claim 1, **characterised in that** process steps are carried out in a batch or in a continuous sequence.

## Patentansprüche

1. Verfahren zur Zubereitung von getrocknetem weißem Reis bestehend aus den Phasen:
a) Quellen der weißen Reiskörner in Wasser mit einer geringeren Temperatur als der des Reisgelatinierungspunktes, wobei der Feuchtigkeitsgehalt der weißen Reiskörner von einem ursprünglichen Wert auf einen Wert von ungefähr 20 - 50 Gew.-% erhöht wird,
b) wiederholtes Spülen und Abgießen der aus der Phase a) erhaltenen weißen Reiskörner mit Wasser von einer geringeren Temperatur als derjenigen des Reisgelatinierungspunktes,
c) Überführen der aus der Phase b) erhaltenen weißen Reiskörner in einen Reaktor,
d) Aussetzen der weißen Reiskörner einer Gelatinierungsbehandlung im Reaktor,
e) Entfernen der gelatinierten weißen Reiskörner aus dem Reaktor,
f) Trennen der gelatinierten weißen Reiskörner, und
g) Trocknen der gelatinierten und getrennten weißen Reiskörner,
und ist **dadurch gekennzeichnet, dass** der Reaktor, in dem die Gelatinierungsbehandlung durchgeführt wird, gegen Massentransfer geschlossen ist und beheizt wird, um ein Gelatinieren der darin enthaltenen Reiskörner zu bewirken.

2. Verfahren nach Anspruch 1, **dadurch gekennzeichnet, dass** bevor die weißen Reiskörner in den Reaktor gegeben werden, mit einer Öl/Wasseremulsion behandelt werden, um die weißen Reiskörner mit einem Ölfilm zu überziehen zwecks Erleichterung der anschließenden Trennphase der gelatinierten weißen Reiskörner.

3. Verfahren nach Anspruch 1, **dadurch gekennzeichnet, dass** bevor die weißen Reiskörner aus dem Reaktor entfernt werden, eine Ruhezeit im geschlossenen Reaktor von ungefähr 30 Minuten gewährt wird.

4. Verfahren nach Anspruch 1, **dadurch gekennzeichnet, dass** die Erhitzungsphase durch Erhitzen des die weißen Reiskörner enthaltenden geschlossenen Reaktors in der Erhitzungskammer mit Dampf durchgeführt wird.

5. Verfahren nach Anspruch 1, **dadurch gekennzeichnet, dass** das in der Quellphase für die weißen Reiskörner verwendete Wasser Nähr- und/oder Aroma- und/oder Farbstoffe enthält.

6. Verfahren nach Anspruch 1, **dadurch gekennzeichnet, dass** die Verfahrensstufen schubweise oder in kontinuierlicher Stufenfolge durchgeführt werden.

## Revendications

1. Procédé de préparation de riz blanc séché, comprenant les stades dans lesquels :
a) on trempe les grains de riz blanc dans de l'eau à une température inférieure au point de gélatinisation du riz, la teneur en humidité des grains de riz blanc étant augmentée d'une valeur d'origine à une valeur d'environ 20% à 50% en poids,
b) on essore et on rince de manière répétée les grains de riz blanc provenant du stade a) par de l'eau à une température inférieure au point de gélatinisation du riz,
c) on transfère les grains de riz blanc provenant du stade b) dans un réacteur,
d) on soumet les grains de riz blanc dans le réacteur à un traitement de gélatinisation,
e) on retire les grains gélatinisés de riz blanc du réacteur,
f) on sépare les grains gélatinisés de riz blanc, et
g) on sèche les grains de riz blanc gélatinisés et séparés et le procédé étant **caractérisé en ce que** le réacteur dans lequel le traitement de gélatinisation est effectué est fermé à un transfert de masse et est chauffé pour faire que les grains de riz qui y sont contenus se gélatinisent.

2. Procédé suivant la revendication 1, **caractérisé en ce qu'**avant de placer les grains de riz blanc dans le réacteur, on les traite par une émulsion d'huile et d'eau afin de revêtir les grains de riz d'une couche de lubrifiant pour faciliter le stade subséquent de séparation des grains gélatinisés de riz blanc.

3. Procédé suivant la revendication 1, **caractérisé en ce qu'**avant de retirer les grains de riz blanc du réacteur, on les laisse reposer dans le réacteur fermé pendant environ 30 minutes.

4. Procédé suivant la revendication 1, **caractérisé en ce qu'**on effectue le stade de chauffage en chauffant le réacteur fermé contenant les grains de riz blanc par de la vapeur dans une chambre de chauffage.

5. Procédé suivant la revendication 1, **caractérisé en ce que** l'eau utilisée dans le stade de trempage des grains de riz blanc comprend des substances nutritives et/ou aromatisantes et/ou colorantes.

6. Procédé suivant la revendication 1, **caractérisé en ce qu'**on effectue les stades du procédé dans une séquence en discontinue ou en continue.
